# EUROPÄISCHE PATENTSCHRIFT

(11) **EP 3 560 736 B1**
(45) Veröffentlichungstag und Bekanntmachung des Hinweises auf die Patenterteilung: **13.04.2022**
(21) Anmeldenummer: 19155398.1
(22) Anmeldetag: 05.02.2019
(51) Int. Cl.: B60C 23/04

(54) **VERFAHREN ZUM ÜBERTRAGEN VON DATEN EINES REIFENMODULS ZU EINEM ZENTRALEN DATENSERVER**
METHOD FOR TRANSMITTING DATA OF A TYRE MODULE TO A CENTRAL DATA SERVER
PROCÉDÉ DE TRANSFERT DES DONNÉES D'UN MODULE DE PNEU SUR UN SERVEUR CENTRAL DE DONNÉES

(30) Priorität: 26.04.2018 DE 102018206457
(43) Veröffentlichungstag der Anmeldung: 30.10.2019
(73) Patentinhaber: Continental Reifen Deutschland GmbH, 30165 Hannover (DE)
(72) Erfinder: James, Akhil, 30169 Hannover (DE)
(74) Vertreter: Continental Corporation

(56) Entgegenhaltungen:
- GB-A- 2 500 697
- US-A1- 2016 247 388
- US-A1- 2016 267 724
- US-A1- 2017 217 261

## Beschreibung

Die Erfindung betrifft ein Verfahren zum Übertragen von Daten eines Reifenmoduls zu einem zentralen Datenserver.

Es ist bekannt, Fahrzeugreifen mit unterschiedlichen Sensoren zu versehen.

Aus dem Stand der Technik sind unterschiedliche Konzepte bekannt, Sensoren am Reifen anzuordnen. Alle herkömmlichen Konzepte besitzen unterschiedliche Nachteile.

Bei herkömmlichen Reifensensoren werden Messdaten zu einer zentralen Empfangseinheit im Fahrzeug übertragen. Die zentrale Empfangseinheit im Fahrzeug wertet die Messdaten aus, und es erfolgt anschließend eine Anzeige im Armaturenbrett des Fahrzeuges. Die Auswertung der Messdaten, die von den Reifensensoren erfasst werden, ist somit immer von einer zentralen Empfangseinheit im Fahrzeug abhängig.

Die US 2016/247388 A1, US 2016/267724 A1, US 2017/217261 A1 und GB 2 500 697 offenbaren bekannte Fahrzeugreifen mit Sensoren und bekannte Verfahren zum Übertragen von Messdaten.

Der Erfindung liegt die Aufgabe zugrunde, Fahrzeugreifen mit Sensoren und die Datenübertragung zu Endkunden zu verbessern.

Gelöst wird die Aufgabe mit einem Verfahren nach Anspruch 1.

Ein Vorteil der Erfindung ist insbesondere darin zu sehen, dass mit dem Verfahren zwei Übertragungswege für die Messdaten des Reifenmoduls zur Verfügung gestellt werden. Mit einem Regelalgorithmus wird ermittelt, welcher der beiden Übertragungstechnologien zur jeweiligen Situation besser geeignet ist, um die Messdaten zu einem zentralen Datenserver oder zu einer zentralen Sende- und Empfangseinheit im Fahrzeug zu übertragen. Insbesondere dann, wenn ein Übertragungsweg ausfällt, kann mit der zweiten Übertragungstechnologie sichergestellt werden, dass die Messdaten sicher weitergeleitet und dem Endkunden zur Verfügung gestellt werden. Auf diese Weise wird sichergestellt, dass der Fahrer des Fahrzeuges jederzeit Zugriff auf die Messdaten des Reifenmoduls hat.

Ein weiterer Vorteil der Erfindung ist insbesondere darin zu sehen, dass mit dem neuen Verfahren auf einfache Weise eine Datenübermittlung zu einem zentralen Datenserver im Internet erfolgt.

Jedes Reifenmodul ist z.B. über eine Niedrigenergieweitverkehrnetzwerk-Verbindung, die ebenfalls als "Low Power Wide Area Network" Verbindung bezeichnet wird, direkt mit einem zentralen Server im Internet verbunden, der die Daten über ein Webportal oder einer App den Nutzern bereitstellt. Beim Niedrigenergieweitverkehrnetzwerk handelt es sich um einen besonderen Standard für eine Mobilfunknetz-Verbindung. Nutzer sind beispielsweise der Fahrer des Fahrzeuges, welches mit den Reifenmodulen ausgerüstet ist oder ein Fuhrparkmanagement, welches für die Wartung der Fahrzeugreifen zuständig ist. Auf diese Weise kann ggf. auch auf zusätzliche Software im Fahrzeug verzichtet werden, die bei den herkömmlichen Systemen für die Auswertung der Messdaten erforderlich ist.

Es ist vorgesehen, dass bei Schritt c) die Regelung des Regelalgorithmus berücksichtigt, ob die Zündung des Fahrzeuges eingeschaltet ist und/oder ob eine Mobilfunknetz-Verbindung verfügbar ist.

Mit diesen Regelparametern lässt sich einfach ermitteln, welche Übertragungstechnologie in der jeweiligen Situation eingesetzt werden sollte. Das Ausschalten der Zündung des Fahrzeuges bedeutet beispielsweise, dass das Fahrzeug sich in einer Parkposition befindet. Außerdem würde im Normalfall ebenfalls die Stromversorgung für die zentrale Sende- und Empfangseinheit im Fahrzeug ausgeschaltet werden.

In einer weiteren vorteilhaften Weiterbildung der Erfindung ist vorgesehen, dass die Regelung bei Schritt c) bei einer ausgeschalteten Zündung des Fahrzeuges ausschließlich die erste Übertragungstechnologie über eine Mobilfunknetz-Verbindung aktiviert.

Wenn sich das Fahrzeug in einer Parkposition befindet, wird grundsätzlich die erste Übertragungstechnologie aktiviert. Dadurch wird sichergestellt, dass die Daten vom Reifenmodul sicher zum Datenserver übertragen werden können.

In einer weiteren vorteilhaften Weiterbildung der Erfindung ist vorgesehen, dass die Regelung bei Schritt c) die zweite Übertragungstechnologie aktiviert, wenn keine Mobilfunknetz-Verbindung zur Verfügung steht.

Bei einem fahrenden Fahrzeug wird in bestimmten Intervallen geprüft, ob eine Mobilfunknetz-Verbindung zur Verfügung steht. Wenn keine Mobilfunknetz-Verbindung zur Verfügung steht, wird umgehend auf die zweite Übertragungstechnologie umgeschaltet. Die Sende- und Empfangseinheit des Reifenmoduls sendet dann über eine Funkverbindung die Messdaten zu der zentralen Sende- und Empfangseinheit im Fahrzeug. Von dort aus werden die Daten an eine Anzeigevorrichtung im Fahrerhaus weitergeleitet. Dadurch wird sichergestellt, dass der Fahrer immer die aktuellen Messdaten des Reifenmoduls erfassen kann.

In einer weiteren vorteilhaften Weiterbildung der Erfindung ist vorgesehen, dass die Messdaten mit einem Zeitstempel auf einem Speicher des Reifenmoduls zwischen gespeichert werden,
wenn keine Mobilfunknetz-Verbindung zur Verfügung steht,
wobei bei der nächsten Mobilfunknetz-Verbindung die gespeicherten Messdaten an den zentralen Datenserver weiter geleitet werden.

Auf diese Weise wird sichergestellt, dass die Messdaten vom Reifenmodul lückenlos von dem zentralen Datenserver ausgewertet und gespeichert werden können.

In einer weiteren vorteilhaften Weiterbildung der Erfindung ist vorgesehen, dass die Regelung bei Schritt c) bei einer eingeschalteten Zündung des Fahrzeuges die erste und die zweite Übertragungstechnologie aktiviert,
wenn aufgrund der Auswertung von Messdaten eine Warnmeldung ausgegeben werden soll.

Für den Fall, dass beispielsweise aufgrund eines Druckverlustes eine Warnmeldung an den Fahrer ausgegeben werden soll, werden immer beide Übertragungstechnologien aktiviert. Dadurch wird sichergestellt, dass der Fahrer schnellstmöglich die Warnmeldung erhält.

In einer weiteren vorteilhaften Weiterbildung der Erfindung ist vorgesehen, dass die Verbindung zwischen der im Reifenmodul integrierten Sende- und Empfangseinheit und dem zentralen Datenserver bidirektional ausgebildet ist,
wobei über die bidirektionale Verbindung eine Software-Aktualisierung für die Software des Reifenmoduls durchgeführt werden kann.

Dadurch ist es nicht mehr erforderlich, das Reifenmodul auszubauen, um es mit einer 'neuen Software zu bestücken.

In einer weiteren vorteilhaften Weiterbildung der Erfindung ist vorgesehen, dass bei Schritt c) das Übertragen der Daten über eine Narrow-Band IoT-Verbindung erfolgt. Dabei handelt es sich um ein so genanntes "Niedrigenergie-Langstrecken-Netzwerk", die eine Klasse von Netzwerkprotokollen und Technologien zur drahtlosen Datenübertragung umfasst. Mit dieser Klasse von Netzwerkprotokollen und Technologien lassen sich Daten drahtlos über eine größere Distanz, auch durch feste Materialien hindurch (z.B. einem Reifen) übertragen. Weitere wesentliche Eigenschaften solcher Protokolle und Technologien sind ein niedriger Energieverbrauch und die Möglichkeit Intervall- , Trigger und/oder Eventbezogen Daten zu übertragen.

In einer weiteren vorteilhaften Weiterbildung der Erfindung ist vorgesehen, dass der Nutzer bzw. Endkunde ein Fahrzeugfahrer ist und die ausgewerteten Daten über eine drahtlose Verbindung auf eine Anzeigevorrichtung im Fahrzeug übertragen werden. Es ist ebenfalls möglich, dass es sich bei der Anzeigevorrichtung um ein mobiles Endgerät wie ein Smartphone oder ein Tablett handelt.

Dadurch können dem Fahrer des Fahrzeuges die ausgewerteten Daten auf einfache Weise optisch zur Verfügung gestellt werden. Der Fahrer erhält beispielsweise die Information, welcher Reifendruck in den einzelnen Fahrzeugreifen vorliegt oder ob ein Reifen einen Alarm aufweist.

In einer weiteren vorteilhaften Weiterbildung der Erfindung ist vorgesehen, dass bei Schritt e) der Endkunde ein Flottenbetreiber ist und dieser über ein Web-Portal auf die ausgewerteten Daten zugreifen kann. Es ist ebenfalls möglich, dass Dritte, wie zum Beispiel Servicepartner oder Händler, auf diese Daten zugreifen.

Dadurch kann ein Flottenbetreiber oder ein Fuhrparkmanagement auf einfache Weise den Zustand und die Wartung der Fahrzeugreifen überwachen. Wenn beispielsweise Fahrzeugreifen an einem Fahrzeug einen zu geringen Reifendruck aufweisen, kann das Fuhrparkmanagement die entsprechenden Maßnahmen ergreifen. Außerdem hat das Fuhrparkmanagement auf diese Weise immer einen Zugriff auf die Reifendaten, die beispielsweise das Reifenalter oder den Reifentyp umfassen.

Auf Basis von Triangulation über die Standorte der Mobilfunkantennen mit denen der Sensor komuniziert, ist es ebenfalls möglich weitere, nicht reifenbezogene Daten zu erfassen, wie die Position des Sensors. Hiermit lassen sich weitere Dienstleistungen anbieten wie z.b. Diebstalschutz, falls der Sensor einen definierten Bereich verlässt. Hierfür ist es nicht nötig, dass der Reifen an einem Fahrzeug verbaut ist.

In einer weiteren vorteilhaften Weiterbildung der Erfindung ist vorgesehen, dass bei Schritt a) mit dem Reifenmodul zumindestens der Reifendruck erfasst und ausgewertet wird, wobei bei einer Abweichung des gemessenen Reifendruckes vom vorgegebenen Sollwert eine Fehlermeldung generiert und bei Schritt d) dem Endkunden angezeigt wird. Auf diese Weise entfällt das manuelle Überprüfen des Reifendruckes an den Fahrzeugreifen, wobei diese manuelle Reifendruckkontrolle insbesondere bei Nutzfahrzeugen mit sehr vielen Reifen immer mit viel Zeitaufwand verbunden ist.

In einer weiteren vorteilhaften Weiterbildung der Erfindung ist vorgesehen, dass die Fehlermeldung bei einer Abweichung von mindestens 10% vom Sollwert des Reifendruckes generiert wird.

Ab einer Abweichung von über 10 % vom Sollwert erhöht sich der Rollwiderstand der Fahrzeugreifen signifikant. Durch diese Maßnahme kann gewährleistet werden, dass die Fahrzeugreifen immer mit einem optimalen Reifendruck betrieben werden und die bestmögliche Laufleistung erreicht wird.

Es ist ebenfalls möglich, dass Fehlermeldungen auf Basis von anderen Kriterien und anderen Sollwerten generiert werden, wie beispielsweise Profiltiefe, Laufleistung, Last, Abweichung zu einer defnierten Position.

In einer weiteren vorteilhaften Weiterbildung der Erfindung ist vorgesehen, dass das Reifenmodul nur in vorgegebenen Zeitintervallen Daten über die "Low Power Wide Area Network" Verbindung zum zentralen Datenserver im Internet überträgt.

Auf diese Weise wird der Energieverbrauch des Reifenmoduls gering gehalten. Das Zeitintervall zum Senden von Daten würde beispielsweise bei einem Tag liegen.

Außerdem ist denkbar, dass das Reifenmodul zusätzlich dann Daten zum zentralen Server sendet, wenn beispielsweise ein zu geringer Reifendruck erfasst wurde.

In einer weiteren vorteilhaften Ausbildung ist vorgesehen, dass das Reifenmodul auch dann eine Verbindung zum Server aufbaut, wenn ein Wert vom definierten Sollwert abweicht.

In einer weiteren vorteilhaften Ausbildung ist vorgesehen, dass das Reifenmodul nur oder auch dann Daten sendet wenn ein Datenversand vom Benutzer, bzw. Server angefordert wird ("Trigger").

In einer weiteren vorteilhaften Weiterbildung der Erfindung ist vorgesehen, dass das Reifenmodul in einem Reifenhohlraum auf der Reifeninnenseite, einem am Reifen angebrachten Container, einer am Reifen angebrachten Haltevorrichtung an der Reifenfelge oder am Reifenventil angeordnet ist.

Diese Positionen sind besonders vorteilhaft, um Messdaten wie beispielsweise den Reifendruck am Fahrzeugreifen zu erfassen.

Anhand eines Ausführungsbeispieles soll die Erfindung näher erläutert werden. Es zeigt:
Fig. 1: ein Verfahren zum Übertragen von Daten eines Reifenmoduls zu einem zentralen Datenserver
Fig. 2: ein Ausführungsbeispiel für die Durchführung des Verfahrens
Fig. 3: ein weiteres Ausführungsbeispiel für die Durchführung des Verfahrens
Fig. 4: ein weiteres Ausführungsbeispiel für die Durchführung des Verfahrens

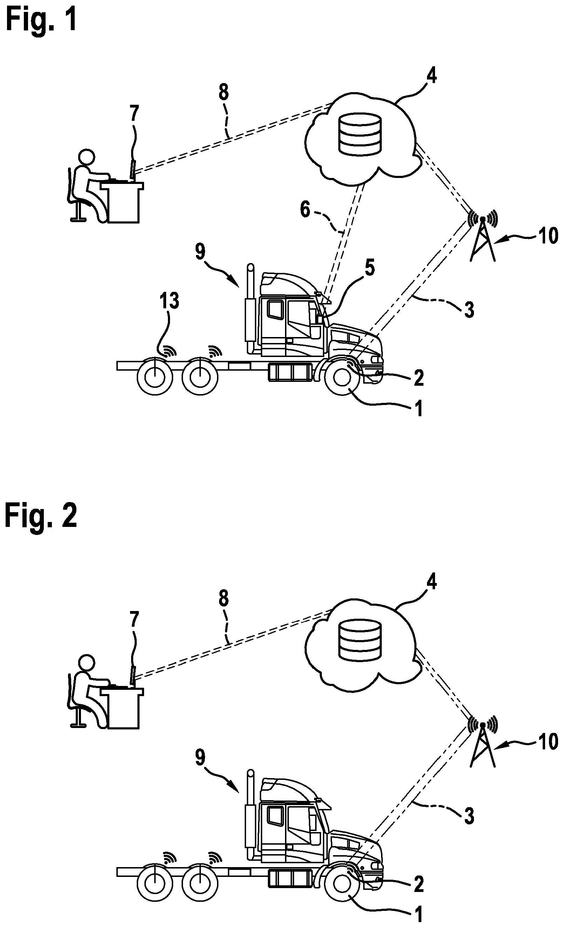

Die Figur 1 zeigt schematisch ein Verfahren zum Übertragen von Daten eines Reifenmoduls zu einem zentralen Datenserver.

Der Fahrzeugreifen 1 weist ein Reifenmodul 2 auf, welches auf der Reifeninnenseite im Reifenhohlraum, einem am Reifen angebrachten Container, einer am Reifen angebrachten - Haltevorrichtung an der Fahrzeugfelge im Reifenhohlraum oder am Reifenventil angeordnet ist. Mit dem Reifenmodul 2 werden physikalische Messdaten des Reifens erfasst, wie beispielsweise der Reifendruck oder die Temperatur im Reifenhohlraum. Außerdem kann das Reifenmodul über einen Speicher verfügen, in dem individuelle Reifendaten abgespeichert sind. Zu diesen Reifendaten zählen beispielsweise das Herstellungsdatum des Fahrzeugreifens oder der Reifentyp. Die mit dem Reifenmodul erfassten Messdaten und Reifendaten werden über eine Rechnereinheit direkt im Reifenmodul ausgewertet. Anschließend erfolgt die Übertragung der Daten mit der ersten Übertragungstechnologie zu einem zentralen Datenserver 4 im Internet. Diese Datenübertragung 3 erfolgt insb. direkt über ein "Low Power Wide Area Network". Bei der Datenübertragung ist keine zentrale Empfangseinheit im Fahrzeug dazwischengeschaltet. Der zentrale Datenserver 4 im Internet bereitet die Daten unter Umständen noch einmal auf und stellt sie dann beispielsweise über ein Webportal den Endkunden zur Verfügung. Die Daten werden außerdem vom zentralen Server 4 an eine Anzeigevorrichtung 5 im Fahrzeug 9 weitergeleitet. Die Datenübertragung 6 kann z.B. über eine Mobilfunknetz-Verbindung erfolgen. Die entsprechenden Daten würden schließlich auf einem Display im Armaturenbrett des Fahrzeuges 9 angezeigt werden. Der Fahrer des Fahrzeuges erhält somit beispielsweise die Information, welcher Reifendruck an den einzelnen Fahrzeugreifen anliegt. Der zentrale Datenserver kann die Daten ebenfalls über ein Webportal einem Flottenbetreiber 7 zur Verfügung stellen. Der Flottenbetreiber hat die Möglichkeit, auf einfache Weise über das Webportal auf alle Fahrzeugreifen zuzugreifen, die mit dem zentralen Datenserver 4 vernetzt sind. Er hat somit beispielsweise einen schnellen Überblick, bei welchen Fahrzeugreifen demnächst ein Reifenwechsel erforderlich ist. Außerdem kann er die entsprechenden Maßnahmen ergreifen, damit alle Fahrzeugreifen seiner Fahrzeugflotte mit einem optimalen Reifendruck betrieben werden.

Die Figur 2 zeigt die Situation, bei der sich das Fahrzeug in einem Parkmodus befindet und die Zündung ausgeschaltet ist. Der Regelalgorithmus erfasst diese Situation insbesondere durch die ausgeschaltete Zündung des Fahrzeuges. In dieser Situation wird ausschließlich die erste Übertragungstechnologie aktiviert, bei der die Messdaten des Reifenmoduls 2 über eine Mobilfunknetzverbindung zum zentralen Datenserver weitergeleitet werden. Bei -der Datenübertragung 3 erfolgt die funkbasierte Signalübertragung in der Regel über einen Funkmast, der sich in Reichweite des Fahrzeuges befindet. Vom zentralen Datenserver 4 werden die Messdaten über eine Datenübertragung 8 zu einer Anzeigevorrichtung beim Flottenbetreiber weitergeleitet.

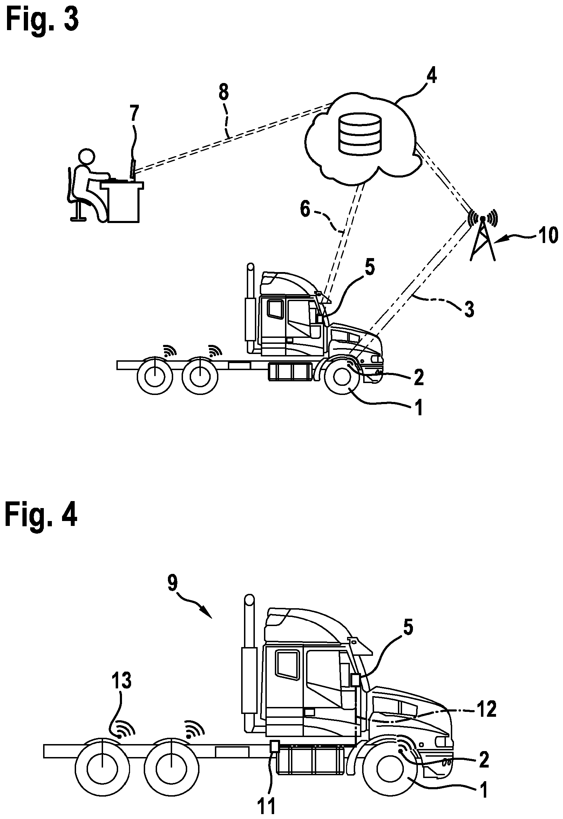

Die Figur 3 zeigt die Situation, bei der sich das Fahrzeug bewegt. Wenn für die Reifenmodule 2 eine Mobilfunknetzverbindung zur Verfügung steht, werden die Messdaten ausschließlich von der ersten Übertragungstechnologie an den zentralen Datenserver 4 übermittelt. Der zentrale Datenserver 4 leitet die ausgewerteten Daten über eine drahtlose Verbindung zu der Anzeigevorrichtung 5 im Fahrzeug. Dadurch wird sichergestellt, dass der Fahrer immer die aktuellen Messdaten von den Reifenmodulen einsehen kann.

Die Figur 4 zeigt das Fahrzeug 9 in einem fahrenden Zustand. Der Regelalgorithmus vom Reifenmodul hat erkannt, dass keine Mobilfunknetzverbindung zur Verfügung steht. In diesem Fall schaltet die Regelung des Reifenmoduls zur zweiten Übertragungstechnologie über. Die Messdaten vom Reifenmodul 2 werden mit der zweiten Übertragungstechnologie 13 direkt zur zentralen Sende- und Empfangseinheit 13 im Fahrzeug übermittelt. Bei dieser Übertragung kann beispielsweise die Bluetooth Technologie eingesetzt werden. Von der zentralen Sende- und Empfangseinheit 11 werden die Messdaten beispielsweise über eine Kabelverbindung 12 zur Anzeigevorrichtung im Fahrerhaus weitergeleitet. Dadurch wird sichergestellt, dass der Fahrer auch dann die Messdaten vom Reifenmodul einsehen kann, wenn keine Mobilfunknetz-Verbindung zur Verfügung steht.

### Bezugszeichenliste (ist Teil der Beschreibung)

- 1: Fahrzeugreifen
- 2: Reifenmodul
- 3: Datenübertragung über ein Low Power Wide Area Network, bzw. Niedrigenergieweitverkehrnetzwerk (erste Übertragungstechnologie)
- 4: Zentraler Datenserver
- 5: Anzeigevorrichtung im Fahrzeug
- 6: Datenübertragung zur Anzeigevorrichtung
- 7: Anzeigevorrichtung beim Flottenbetreiber
- 8: Datenübertragung zur Anzeigevorrichtung
- 9: Fahrzeug, insb. Zugmaschine eines Lastkraftwagens
- 10: Funkmast für Mobilfunknetz-Verbindung
- 11: Zentrale Sende- und Empfangseinheit im Fahrzeug
- 12: Verbindungsleitung zur Anzeigevorrichtung im Fahrzeug
- 13: Datenübertragung über Bluetooth zur zentralen Sende- und Empfangseinheit im Fahrzeug (zweite Übertragungstechnologie)

## Patentansprüche

1. Verfahren zum Übertragen von Daten eines Reifenmoduls (2) zu einem zentralen Datenserver (4),
mit mindestens den folgenden Schritten,
a) Bereitstellen eines Fahrzeugreifens (1) mit einem Reifenmodul (2),
wobei mit dem Reifenmodul (2) Messdaten und/oder individuelle Reifendaten erfasst werden,
wobei das Reifenmodul (2) eine Sende- und Empfangseinheit mit mindestens zwei unterschiedlichen funkbasierten Übertragungstechnologien (3, 13) umfasst, wobei bei der ersten Übertragungstechnologie (3) die Messdaten und/oder Reifendaten über eine Mobilfunknetz-Verbindung zum Datenserver (4) übertragen werden
und bei der zweiten Übertragungstechnologie (13) die Messdaten und/oder Reifendaten über eine Funkverbindung zu einer zentralen Empfangseinheit (11) im Fahrzeug übertragen werden,
b) Auswerten der Messdaten und/oder Reifendaten mit einer im Reifenmodul (2) integrierten Rechnereinheit,
c) Übertragen der Messdaten und/oder Reifendaten mit der im Reifenmodul (2) integrierten Sende- und Empfangseinheit,
wobei mit einem Regelalgorithmus bestimmt wird, ob die Messdaten und/oder Reifendaten mit der ersten und/oder der zweiten Übertragungstechnologie (3, 13) übertragen werden,
wobei die Regelung bei einer ausgeschalteten Zündung des Fahrzeuges (9) ausschließlich die erste Übertragungstechnologie (3) über eine Mobilfunknetz-Verbindung aktiviert,
d) Empfangen und Auswerten der Messdaten und/oder Reifendaten mit dem zentralen Datenserver (4) und/oder mit der zentralen Empfangseinheit (11) im Fahrzeug,
e) Bereitstellen der Daten an einen Endkunden.

2. Verfahren nach Anspruch 1,
**dadurch gekennzeichnet, dass**
bei Schritt c) die Regelung des Regelalgorithmus berücksichtigt, ob die Zündung des Fahrzeuges (9) eingeschaltet ist und/oder ob eine Mobilfunknetz-Verbindung verfügbar ist.

3. Verfahren nach einem der vorhergehenden Ansprüche,
**dadurch gekennzeichnet, dass**
die Regelung bei Schritt c) die zweite Übertragungstechnologie (13) aktiviert, wenn keine Mobilfunknetz-Verbindung zur Verfügung steht.

4. Verfahren nach einem der vorhergehenden Ansprüche,
**dadurch gekennzeichnet, dass**
die Messdaten mit einem Zeitstempel auf einem Speicher des Reifenmoduls (2) zwischen gespeichert werden,
wenn keine Mobilfunknetz-Verbindung zur Verfügung steht,
wobei bei der nächsten Mobilfunknetz-Verbindung die gespeicherten Messdaten an den zentralen Datenserver (4) weiter geleitet werden.

5. Verfahren nach einem der vorhergehenden Ansprüche,
**dadurch gekennzeichnet, dass**
die Regelung bei Schritt c) bei einer eingeschalteten Zündung des Fahrzeuges (9) die erste und die zweite Übertragungstechnologie (3, 13) aktiviert,
wenn aufgrund der Auswertung von Messdaten eine Warnmeldung ausgegeben werden soll.

6. Verfahren nach einem der vorhergehenden Ansprüche,
**dadurch gekennzeichnet, dass**
die Verbindung zwischen der im Reifenmodul (2) integrierten Sende- und Empfangseinheit und dem zentralen Datenserver bidirektional ausgebildet ist, wobei über die bidirektionale Verbindung eine Software-Aktualisierung für die Software des Reifenmoduls (2) durchgeführt werden kann.

7. Verfahren nach einem der vorhergehenden Ansprüche,
**dadurch gekennzeichnet, dass**
bei Schritt e) der Endkunde ein Fahrzeugfahrer ist und die ausgewerteten Messdaten über eine Funkverbindung (6) auf eine Anzeigevorrichtung (5) im Fahrzeug (9) übertragen werden.

8. Verfahren nach einem der vorhergehenden Ansprüche,
**dadurch gekennzeichnet, dass**
bei Schritt e) der Endkunde ein Flottenbetreiber, Händler oder Dienstleister ist und dieser über ein Web-Portal auf die ausgewerteten Daten zugreifen kann.

9. Verfahren nach einem der vorhergehenden Ansprüche,
**dadurch gekennzeichnet, dass**
bei Schritt a) mit dem Reifenmodul (2) zumindestens der Reifendruck erfasst und ausgewertet wird,
wobei bei einer Abweichung des gemessenen Reifendruckes vom vorgegebenen Sollwert eine Warnmeldung generiert und bei Schritt e) dem Endkunden angezeigt wird.

10. Verfahren nach einem der vorhergehenden Ansprüche,
**dadurch gekennzeichnet, dass**
bei der zweiten Übertragungstechnologie (13) eine Übertragung mit Bluetooth, ZigBee oder einer Hochfrequenz-Verbindung erfolgt.

11. Verfahren nach einem der vorhergehenden Ansprüche,
**dadurch gekennzeichnet, dass**
in vorgegebenen Zeitintervallen Messdaten über ein Niedrigenergieweitverkehrnetzwerk zum zentralen Datenserver (4) im Internet übertragen werden.

## Claims

1. Method for transmitting data of a tyre module (2) to a central data server (4), comprising at least the following steps:
a) providing a vehicle tyre (1) having a tyre module (2),
wherein the tyre module (2) is used to capture measurement data and/or individual tyre data,
wherein the tyre module (2) comprises a transmitting and receiving unit using at least two different radio-based transmission technologies (3, 13), wherein the first transmission technology (3) involves the measurement data and/or tyre data being transmitted to the data server (4) by way of a mobile radio network connection
and the second transmission technology (13) involves the measurement data and/or tyre data being transmitted to a central receiving unit (11) in the vehicle by way of a radio connection,
b) evaluating the measurement data and/or tyre data using a computer unit integrated in the tyre module (2),
c) transmitting the measurement data and/or tyre data using the transmitting and receiving unit integrated in the tyre module (2),
wherein a control algorithm is used to determine whether the measurement data and/or tyre data are transmitted using the first and/or the second transmission technology (3, 13),
wherein the control exclusively activates the first transmission technology (3) by way of a mobile radio network connection when the ignition of the vehicle (9) is switched off,
d) receiving and evaluating the measurement data and/or tyre data using the central data server (4) and/or using the central receiving unit (11) in the vehicle,
e) providing the data to an end customer.

2. Method according to Claim 1,
**characterized in that**
in step c) the control of the control algorithm takes into consideration whether the ignition of the vehicle (9) is switched on and/or whether a mobile radio network connection is available.

3. Method according to either of the preceding claims,
**characterized in that**
the control activates the second transmission technology (13) in step c) if a mobile radio network connection is not available.

4. Method according to one of the preceding claims,
**characterized in that**
the measurement data are buffer-stored with a timestamp in a memory of the tyre module (2)
if a mobile radio network connection is not available,
wherein the next mobile radio network connection results in the stored measurement data being forwarded to the central data server (4).

5. Method according to one of the preceding claims,
**characterized in that**
the control activates the first and the second transmission technology (3, 13) in step c) when the ignition of the vehicle (9) is switched on
if a warning is meant to be output on the basis of the evaluation of measurement data.

6. Method according to one of the preceding claims,
**characterized in that**
the connection between the transmitting and receiving unit integrated in the tyre module (2) and the central data server is in bidirectional form, wherein the bidirectional connection can be used to perform a software update for the software of the tyre module (2).

7. Method according to one of the preceding claims,
**characterized in that**
in step e) the end customer is a vehicle driver and the evaluated measurement data are transmitted to a display apparatus (5) in the vehicle (9) by way of a radio connection (6).

8. Method according to one of the preceding claims,
**characterized in that**
in step e) the end customer is a fleet operator, dealer or service provider and said fleet operator, dealer or service provider can use a web portal to access the evaluated data.

9. Method according to one of the preceding claims,
**characterized in that**
in step a) the tyre module (2) is used to capture and evaluate at least the tyre pressure,
wherein a deviation of the measured tyre pressure from the predefined setpoint value results in a warning being generated and being displayed to the end customer in step e).

10. Method according to one of the preceding claims,
**characterized in that**
the second transmission technology (13) involves a transmission being effected using Bluetooth, ZigBee or a radio-frequency connection.

11. Method according to one of the preceding claims,
**characterized in that**
measurement data are transmitted to the central data server (4) on the Internet in predefined time intervals by way of a low-energy wide area network.

## Revendications

1. Procédé permettant de transmettre des données d'un module de pneumatique (2) à un serveur de données central (4),
comprenant au moins les étapes suivantes consistant à
a) fournir un pneumatique de véhicule (1) doté d'un module de pneumatique (2), le module de pneumatique (2) détectant des données de mesure et/ou des données de pneumatique individuelles,
le module de pneumatique (2) comprenant une unité d'émission et de réception dotée d'au moins deux technologies de transmission (3, 13) à base radio différentes,
dans lequel, selon la première technologie de transmission (3), les données de mesure et/ou les données de pneumatique sont transmises au serveur de données (4) par une liaison par réseau de communication mobile,
et selon la deuxième technologie de transmission (13), les données de mesure et/ou les données de pneumatique sont transmises par une liaison radio à une unité de réception centrale (11) dans le véhicule,
b) évaluer les données de mesure et/ou les données de pneumatique par une unité de calcul intégrée dans le module de pneumatique (2),
c) transmettre les données de mesure et/ou les données de pneumatique par l'unité d'émission et de réception intégrée dans le module de pneumatique (2), un algorithme de régulation déterminant si les données de mesure et/ou les données de pneumatique sont transmises selon la première et/ou selon la deuxième technologie de transmission (3, 13),
dans lequel, lorsque le contact du véhicule (9) est coupé, la régulation active exclusivement la première technologie de transmission (3) par une liaison par réseau de communication mobile,
d) recevoir et évaluer les données de mesure et/ou les données de pneumatique par le serveur de données central (4) et/ou par l'unité de réception centrale (11) dans le véhicule,
e) fournir les données à un client final.

2. Procédé selon la revendication 1, **caractérisé en ce qu'**à l'étape c), la régulation de l'algorithme de régulation tient compte du fait que le contact du véhicule (9) est mis et/ou qu'une liaison par réseau de communication mobile est disponible.

3. Procédé selon l'une quelconque des revendications précédentes, **caractérisé en ce que** la régulation à l'étape c) active la deuxième technologie de transmission (13) si aucune liaison par réseau de communication mobile n'est disponible.

4. Procédé selon l'une quelconque des revendications précédentes, **caractérisé en ce que** les données de mesure avec un horodatage sont mémorisées temporairement dans une mémoire du module de pneumatique (2) si aucune liaison par réseau de communication mobile n'est disponible, dans lequel, à l'occasion de la liaison par réseau de communication mobile suivante, les données de mesure mémorisées sont retransmises au serveur de données central (4).

5. Procédé selon l'une quelconque des revendications précédentes, **caractérisé en ce que**, lorsqu'un contact du véhicule (9) est mis, la régulation active à l'étape c) la première et la deuxième technologie de transmission (3, 13) si un message d'alarme doit être émis en raison de l'évaluation de données de mesure.

6. Procédé selon l'une quelconque des revendications précédentes, **caractérisé en ce que** la liaison entre l'unité d'émission et de réception intégrée dans le module de pneumatique (2) et le serveur de données central est réalisée de manière bidirectionnelle, une mise à jour de logiciel pour le logiciel du module de pneumatique (2) pouvant être effectuée par l'intermédiaire de la liaison bidirectionnelle.

7. Procédé selon l'une quelconque des revendications précédentes, **caractérisé en ce qu'**à l'étape e), le client final est un conducteur de véhicule, et les données de mesure évaluées sont transmises par une liaison radio (6) à un dispositif d'affichage (5) dans le véhicule (9).

8. Procédé selon l'une quelconque des revendications précédentes, **caractérisé en ce qu'**à l'étape e), le client final est un gestionnaire de flotte, un distributeur ou un fournisseur de service, et celui-ci peut accéder aux données évaluées par l'intermédiaire d'un portail internet.

9. Procédé selon l'une quelconque des revendications précédentes, **caractérisé en ce qu'**à l'étape a), au moins la pression de pneumatique est détectée et évaluée par le module de pneumatique (2), dans lequel, en cas d'écart de la pression de pneumatique mesurée par rapport à la valeur de consigne prédéfinie, un message d'alarme est généré et affiché à destination du client final à l'étape e).

10. Procédé selon l'une quelconque des revendications précédentes, **caractérisé en ce que** selon la deuxième technologie de transmission (13), une transmission par Bluetooth, ZigBee ou une liaison haute fréquence est effectuée.

11. Procédé selon l'une quelconque des revendications précédentes, **caractérisé en ce que** dans des intervalles de temps prédéfinis, des données de mesure sont transmises au serveur de données central (4) sur internet par un réseau étendu basse consommation.
